# EUROPÄISCHE PATENTSCHRIFT

(11) **EP 1 198 889 B1**
(45) Veröffentlichungstag und Bekanntmachung des Hinweises auf die Patenterteilung: **25.06.2003**
(21) Anmeldenummer: 00929280.6
(22) Anmeldetag: 05.04.2000
(51) Int. Cl.: H03L 7/085, H03L 7/099, H03L 7/181, H03M 3/04

(54) **TAKTSIGNALGENERATOR**
CLOCK SIGNAL GENERATOR
GENERATEUR DE SIGNAL D'HORLOGE

(30) Priorität: 21.07.1999 DE 19934175
(43) Veröffentlichungstag der Anmeldung: 24.04.2002
(73) Patentinhaber: SIEMENS AKTIENGESELLSCHAFT, 80333 München (DE)
(72) Erfinder: DOBRAMYSL, Dieter, D-81379 München (DE); LILLIE, Frank, D-80337 München (DE); HOFMANN, Ludwig, D-85304 Ilmmünster (DE)
(86) Internationale Anmeldenummer: DE0001054
(87) Internationale Veröffentlichungsnummer: WO01008311

(56) Entgegenhaltungen:
- WO-A1-96/17287
- WO-A1-97/39529
- WO-A2-00/07301
- US-A- 5 898 325

## Beschreibung

Die vorliegende Erfindung betrifft einen Taktsignalgenerator nach dem Oberbegriff des Anspruches 1, insbesondere einen DDS-Taktsignalgenerator nach dem Oberbegriff des Anspruches 1.

DDS-Schaltungen (Direct Digital Synthesizer) werden als Modulatoren und Synthesizer zur Signalsynthese eingesetzt. Eine DDS-Schaltung stellt im Prinzip einen Taktteiler mit einem variablen Teilerfaktor dar, d.h. die DDS-Schaltung teilt eine ihr zugeführte Taktfrequenz auf eine beliebig einstellbare Signalfrequenz herunter. Zu diesem Zweck umfaßt die DDS-Schaltung einen Akkumulator, der ein an ihm angelegtes Frequenzwort, welches einen bestimmten Wert besitzt, aufaddiert oder hochzählt und bei Erreichen eines bestimmten Grenzwerts, d.h. im Falle eines Überlaufs, wieder mit einem entsprechenden Restwert von vorne beginnt und eine Taktflanke oder einen Taktpuls ausgibt. Diese Taktflanke wird bei den sogenannten Puls Output DDS-Schaltungen zur weiteren Signalbearbeitung verwendet. Puls Output DDS-Schaltungen stellen einen besonders einfachen DDS-Schaltungstyp dar, da die zuvor beschriebene Taktflanke direkt über das Übertragsbit (Carry Bit) oder MSB (Most Significant Bit) des Akkumulators erzeugt wird und somit hierzu weder ein Sinus-ROM-Speicher noch ein Analog/Digital-Wandler erforderlich ist.

Bei jedem Überlauf entsteht jedoch ein Fehler, der von der zeitlichen Auflösung, d.h. von der jeweils verwendeten Taktfrequenz, abhängt. Der durch die begrenzte zeitliche Auflösung des Taktsignals verursachte Fehler wird auf das Carry Bit oder das MSB des Akkumulators der DDS-Schaltung übertragen. Dieser Fehler bzw. der daraus resultierende Jitter im Ausgangspuls kann verringert werden, wenn der Takt bei gleichbleibender Ausgangsfrequenz erhöht und demzufolge ein kleineres Frequenzwort verwendet wird, da mit einem kleineren Frequenzwort, welches öfter aufsummiert wird, der Überlauf-Grenzwert genauer erreicht werden kann. Daher sollte die Taktfrequenz einer DDS-Schaltung möglichst hoch sein. Die Taktfrequenz wird jedoch durch die derzeitigen technologischen Möglichkeiten begrenzt. Im Augenblick liegt die maximale Taktfrequenz einer CMOS-DDS-Schaltung bei ca. 300 MHz, wobei bereits ab ca. 100 MHz der Stromverbrauch deutlich ansteigt. Für Mobiltelefone werden daher augenblicklich nur CMOS-DDS-Bausteine für Taktfrequenzen < 100 MHz angeboten, die zwar demzufolge eine geringe Stromaufnahme besitzen, andererseits aus den zuvor genannten Gründen einen relativ starken Jitter im Ausgangspuls aufweisen. Zudem sind diese Bausteine zumeist mit integriertem Sinus-ROM und Analog/Digital-Wandler nur für spezielle Anwendungen vorgesehen.

Der im MSB der DDS-Schaltung enthaltene und der jeweils verwendeten Taktfrequenz entsprechende Jitter kann alternativ durch zusätzliche Signalnachverarbeitungsmaßnahmen unterdrückt bzw. beseitigt werden, was jedoch äußerst aufwendig ist und einen entsprechend starken Anstieg der Kosten zur Folge hat.

WO 96 17287 A1 offenbart einen Taktsignalgenerator mit einer DDS-Schaltung zum Aufaddieren eines Frequenzworts gemäß einer bestimmten Frequenz durch einen Akkumulator, wobei zusätzliche Schaltungsmittel vorgesehen sind, um einen Parameterwert zu ermitteln, der einem korrigierten, idealen, Überlaufzeitpunkt der DDS-Schaltung entspricht, und wobei in Abhängigkeit von diesem Parameterwert unter Verwendung eines Sigma-Delta-Modulators ein binäres Korrektursignal bestimmt wird, das zu m höherwertigen Bits des Akkumulatorausgangssignals addiert wird, um über eine Look-up-Tabelle das Ausgangssignal zu einem korrigierten Zeitpunkt auszugeben. Auf diese Weise wird der durch die begrenzte zeitliche Auflösung des Taktsignals verursachte Phasenjitter des Ausgangssignals reduziert.

Der vorliegenden Erfindung liegt daher die Aufgabe zugrunde, einen gemäß der zuvor beschriebenen DDS-Technik aufgebauten Taktsignalgenerator derart auszugestalten, daß der in dem von dem Taktsignalgenerator ausgegebenen Ausgangspuls enthaltene Jitter wirkungsvoll unterdrückt oder zumindest reduziert werden kann.

Diese Aufgabe wird durch einen Taktsignalgenerator mit den Merkmalen des Anspruches 1 gelöst. Die Unteransprüche definieren vorteilhafte und bevorzugte Ausführungsformen der vorliegenden Erfindung.

Erfindungsgemäß werden zur Erzeugung des Ausgangstaktpulses bzw. der Ausgangstaktflanke ein 'schneller' und ein 'langsamer' DDS-Schaltungsteil verwendet. Der 'langsame' DDS-Schaltungsteil arbeitet wie üblich mit einer realtiv niedrigen Taktfrequenz, während der 'schnelle' DDS-Schaltungsteil mit einer Taktfrequenz arbeitet, die höher als diejenige des 'langsamen' DDS-Schaltungsteils ist. Mit Hilfe des 'langsamen' DDS-Schaltungsteils wird wie üblich ein bestimmtes Frequenzwort hochgezählt und bei Auftreten eines Überlaufs ein Ausgangspuls erzeugt. Um den im somit erzeugten Ausgangspuls enthaltenen Jitter zu reduzieren, wird zunächst der ideale Überlaufzeitpunkt des 'langsamen' DDS-Schaltungsteils, d.h. derjenige Zeitpunkt, bei dem kein Jitter auftreten würde, .wenn zu diesem Zeitpunkt der Ausgangspuls erzeugt werden würde, ermittelt und davon abhängig mit der höheren zweiten Frequenz ein Ausgangspuls zum idealen Überlaufzeitpunkt ausgegeben.

Der Jitter wird durch die Verwendung der höheren Taktfrequenz reduziert, wobei andererseits der Stromverbrauch nur gering ansteigt, da der mit der höheren Taktfrequenz betriebene DDS-Schaltungsteil nur während des MSB-Überlaufs des 'langsamen' DDS-Schaltungsteils, d.h. nur kurzzeitig, arbeitet.

Die von den beiden DDS-Schaltungsteilen verwendeten Frequenzen müssen zueinander phasenstarr synchronisiert sein, so daß die höhere Frequenz einem ganzzahligen Vielfachen der niedrigeren Frequenz entspricht.

Der 'schnelle' DDS-Schaltungsteil kann beispielsweise durch einen Akkumulator mit nachgeschaltetem Komparator gebildet sein, so daß mit Hilfe des 'schnellen DDS-Schaltungsteils' ein zweites Frequenzwort, welches kleiner als das Frequenzwort des 'langsamen' DDS-Schaltungsteils ist, bis zum Erreichen eines dem idealen Überlaufzeitpunkt des 'langsamen' DDS-Schaltungsteils entsprechenden Zählerstand aufaddiert, um anschließend einen Ausgangspuls auszugeben, dessen Flanke (MSB) zeitlich deutlich genauer als die von dem 'langsamen' DDS-Schaltungsteil erzeugte Flanke ist.

Des weiteren kann der mit der höheren Frequenz betriebene 'schnelle' DDS-Schaltungsteil auch in Form eines Sigma-Delta-Wandlers realisiert sein.

Die Erfindung eignet sich beispielsweise insbesondere in Mobiltelefonen zur Signalsynthese, da hier ein geringer Stromverbrauch für eine möglichst lange Betriebszeit von besonderer Bedeutung ist.

Die Erfindung wird nachfolgend anhand bevorzugter Ausführungsbeispiele unter Bezugnahme auf die beigefügte Zeichnung näher erläutert.
Fig. 1 zeigt allgemein den Aufbau einer DDS-Schaltung. Wie sie auch bei der vorliegenden Erfindung verwendet wird,
Fig. 2A und 2B zeigen Darstellungen zur Erläuterung des der Erfindung zugrundeliegenden Prinzips,
Fig. 3 zeigt ein vereinfachtes Blockschaltbild einer Schaltungsanordnung, welche zur Ermittlung eines Parameterwerts verwendet wird, welcher den idealen Überlaufzeitpunkt des in Fig. 1 und Fig. 3 gezeigten 'langsamen' DDS-Schaltungsteils repräsentiert,
Fig. 4 zeigt ein vereinfachtes Blockschaltbild eines 'schnellen' DDS-Schaltungsteils, der gemäß einem ersten Ausführungsbeispiel der vorliegenden Erfindung zur Jitterreduzierung eingesetzt wird, und
Fig. 5 zeigt ein vereinfachtes Blockschaltbild eines 'schnellen' DDS-Schaltungsteils, der gemäß einem zweiten Ausführungsbeispiel der vorliegenden Erfindung zur Jitterreduzierung eingesetzt wird.

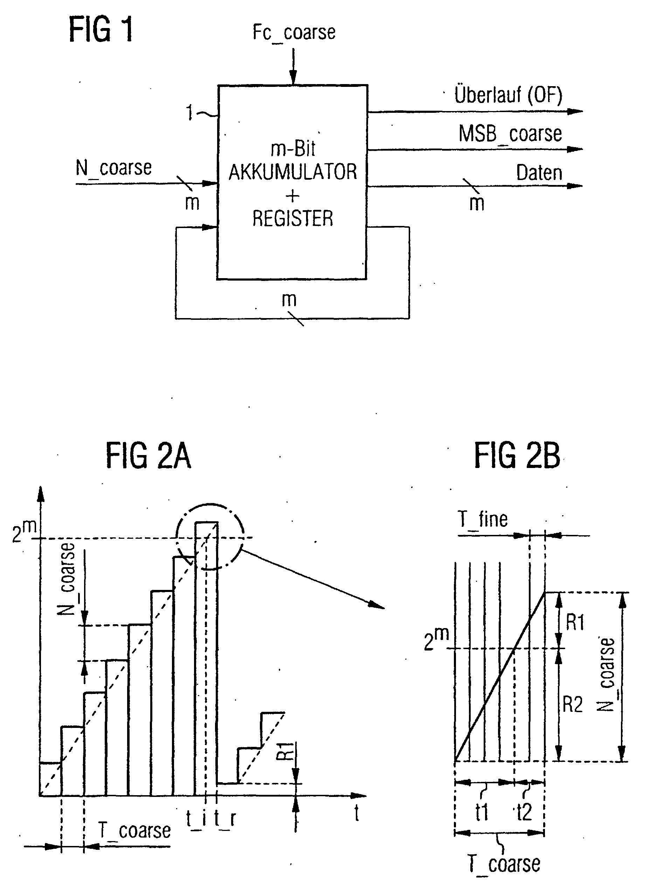

In Fig. 1 ist eine sogenannte Puls Output DDS-Schaltung 1 dargestellt, die mit einer bestimmten Taktfrequenz Fc_coarse betrieben wird und ein bestimmtes Frequenzwort N_coarse mit der Bitbreite m empfängt. Die DDS-Schaltung 1 umfaßt einen m-Bit-Akkumulator mit Register, so daß das Frequenzwort N_coarse kontinuierlich hochgezählt, d.h. aufaddiert wird. Am Ausgang der DDS-Schaltung 1 wird ein m-Bit-Datensignal ausgegeben, welches den augenblicklichen Zählerstand des Akkumulators wiedergibt.

Aufgrund der Funktionsweise des Akkumulators weist das Datensignal den in Fig. 2A gezeigten treppenförmigen Verlauf auf. Bei Erreichen eines bestimmten und durch die Bitbreite m definierten Grenzwerts (2^{m}), d.h im Überlauf fall (Overflow), wird ein entsprechendes Überlaufsignal OF ausgegeben. Der Zählerstand des Akkumulators wird auf denjenigen Restwert R1 zurückgesetzt, den der Zählerstand nach der ersten Taktperiode unmittelbar nach dem Auftreten des Überlaufs größer als der Überlauf-Grenzwert ist. Der Rest R1, der zugleich Startwert für den nachfolgenden Akkumulationszyklus ist, entspricht somit allgemein der Modulo-Operation k*N_coarse mod 2^{m}, wobei k die bis zum Erreichen des Überlauf-Grenzwerts erforderliche Anzahl von Taktperioden T_coarse = 1/Fc_coarse darstellt. Mit Zurücksetzen des Zählerstands des Akkumualtors sowie des Datensignals auf den Wert R1 wird zugleich ein in Fig. 1 mit MSB_coarse bezeichnetes MSB gesetzt und als Ausgangstaktpuls ausgegeben.

Aus Fig. 2A ist ersichtlich, daß es einen idealen zeitpunkt t_i des Akkumulator-Überlaufs und einen realen Zeitpunkt t_r des Akkumulator-Überlaufs gibt. Der ideale Überlauf-Zeitpunkt t_i entspricht demjenigen Zeitpunkt, zu dem die in Fig. 2A eingezeichnete Steigungslinie des treppenförmigen Datensignals den Überlauf-Grenzwert schneidet. Ein Überlauffall kann jedoch von der DDS-Schaltung 1 immer nur nach Ablauf einer ganzen Taktperiode T_coarse = 1/Fc_coarse erfaßt werden. Aus Gründen des Energieverbrauchs wird jedoch die Verwendung einer relativ niedrigen Taktfrequenz Fc_coarse angestrebt, so daß die Differenz zwischen den Zeitpunkten t_i und t_r unter Umständen relativ groß sein kann, was dann zu einem entsprechend großen Fehler im MSB-Ausgangspuls führt.

In Fig. 2B ist vergrößert das Steigungsdreieck des in Fig. 2A gezeigten treppenförmige Datehsignals im Bereich des Überlaufs dargestellt. Dabei ist aus Fig. 2b insbesondere ersichtlich, daß sich das aufgrund der relativ niedrigen Taktfrequenz Fc_coarse relativ grobe Frequenzwort N_coarse aus der Summe des Restwerts R1 und eines weiteren Werts R2 zusammensetzt. Durch die Steigungslinie wird der Wert R1 nach einer Zeitspanne t1 und der Wert R2 nach einer Zeitspanne t1 + t2 erreicht. Die Zeitspanne t2 entspricht der Differenz zwischen dem Zeitpunkt t_r des realen Überlaufs und dem Zeitpunkt des idealen Überlaufs t_i. Darüber hinaus gilt gemäß Fig.2B die Beziehung t2 =R1 * T_coarse/N_coarse.

In Fig. 2B ist auch die Taktperiode T_fine eines höheren Taktsignals Fc_fine dargestellt. Dabei ist insbesondere erkennbar, daß im Gegensatz zu der relativ groben Taktperiode T_coarse mit dieser feineren Taktperiode T_fine der ideale Überlauf-Zeitpunkt genau getroffen werden kann, d.h. eine Taktperiode T_fine ist genau dann abgeschlossen, wenn die Steigungslinie den Überlauf-Grenzwert erreicht.

Diese Erkenntnis wird im Rahmen der vorliegenden Erfindung zur Erzeugung eines möglichst fehler- oder jitterfreien MSB-Ausgangspulses ausgenützt, indem zunächst der ideale Überlauf-Zeitpunkt t_i bzw. ein diesen idealen Zeitpunkt repräsentierender Parameterwert bestimmt und anschließend davon abhängig mit Hilfe der feineren Taktperiode T_fine ein MSB-Ausgangspuls mit zeitlich korrigierter Taktflanke erzeugt wird.

Der in Fig. 2B gezeigte Restwert R1 kann beispielsweise einfach dadurch erhalten werden, daß bei Auftreten eines Überlaufsignals der augenblickliche Zählerstand des Akkumulators der DDS-Schaltung 1 bzw. dessen Datensignal ausgewertet wird, da zu diesem Zeitpunkt der Zählerstand, wie in Fig. 2A gezeigt ist, dem Restwert R1 entsprechen muß. Über die Beziehung R2 = N_coarse - R1 kann dann der Wert R2 bestimmt werden, der - wie in Fig. 2B gezeigt ist - ein Maß für den idealen Überlauf-Zeitpunkt ist.

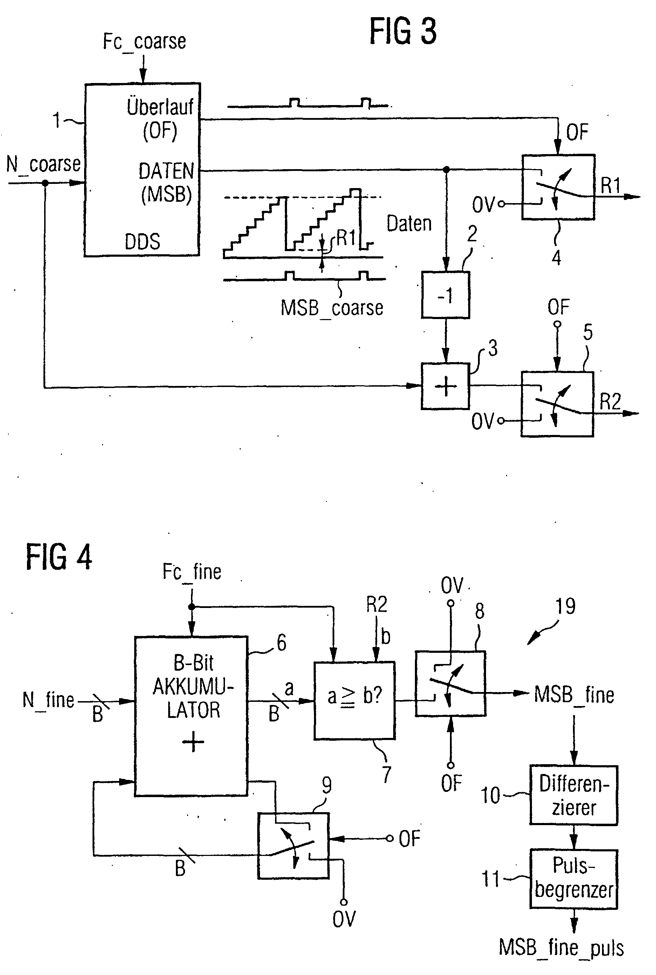

Eine entsprechende Schaltungsanordnung hierzu ist in Fig. 3 dargestellt und umfaßt einen Negierer 2 und einen Addierer 3. Darüber hinaus sind steuerbare Schalter 4, 5 vorgesehen, welche bei OF = 0 oder R2 = 0 auf 0V gelegt werden, um die Schaltung zurückzusetzen. In Fig. 3 ist zudem nochmals der Verlauf der von der DDS-Schaltung 1 erzeugten Ausgangssignale dargestellt.

Die genaue Flanke des MSB-Ausgangspulses kann bei Bekanntsein des Werts R2 nunmehr mit Hilfe der feineren Taktperiode T_fine festgelegt werden. Dabei ist zu beachten, daß die Werte R1 und R2 erst nach Auftreten eines Überlaufs in der DDS-Schaltung 1 bekannt sind, so daß die Bestimmung der korrigierten Taktflanke erst mit einer Verzögerung der groben Taktperiode T_coarse möglich ist.

In Fig. 4 ist eine Möglichkeit für die Erzeugung der genauen Taktflanke des MSB-Ausgangspulses dargestellt. Dabei sei beispielsweise angenommen, daß das Verhältnis Fc coarse:Fc fine dem Verhältnis 1:10 entspricht. In der Praxis könnte das Verhältnis auch zu 1:16, 1:32 ... 1:2ⁿ gewählt werden, da dann Fc_coarse sehr einfach digital durch eine Bit-Schiebeoperation aus Fc_fine erzeugt werden kann.

Allgemein ist jedoch die Bereitstellung unteschiedlicher Taktraten kein Problem. In GSM (Global System For Mobile Communications)/CDMA (Code Division Multiple Access)-Systemen sind beispielsweise unterschiediche Zeitbasen ohnehin vorhanden oder leicht zu realisieren. Intergrierte spannungsgesteuerte Oszillatoren (Voltage Controlled Oscillators, VCOs) schwingen aus technischen Gründen bei Oberwellen der Grundfrequenz, so daß über entsprechende Teiler die gewünschten Frequenzen leicht realisiert werden können. Diese VCO-Frequenzen können in GSM-Systemen beispielsweise bei 3-4 GHz liegen. Dasselbe Ergebnis kann auch mit PLL-Ketten realisiert werden.

Gemäß Fig. 4 wird entsprechend der höheren Taktfrequenz Fc_fine ein kleineres Frequenzwort N_fine = N_coarse /10 verwendet, welches einem Akkumulator 6 mit der Bitbreite B zugeführt und aufaddiert wird. Die Funktionsweise des Akkumulators 6 entspricht dabei exakt der Funktionsweise des Akkumulators der in Fig. 1 und Fig. 3 gezeigten DDS-Schaltung 1. Der Akkumulator 6 addiert somit mit der Taktfrequenz Fc_fine das feinere Frequenzwort N_fine auf, wobei von einem Komparator 7 der Zählerstand des Akkumulators 6 mit dem beispielsweise von der in Fig. 3 gezeigten Schaltung zugeführten Wert R2 verglichen wird. Ist der Zählerstand des Akkumulators 6 größer als R2, wird der Ausgang des Komparators 7 auf 'HIGH' gesetzt, wodurch die genaue und korrigierte MSB-Taktflanke MSB_fine bestimmt ist. Da das Signal R2 pulsförmig ist, sind analog zu Fig. 3 steuerbare Schalter 8 und 9 vorgesehen, welche den Akkumulator 6 bzw. den Komparator 7 auf Null setzen, falls das Überlaufsignal OF bzw. das Signal R2 den Wert 0 besitzt.

Auch der in Fig. 4 gezeigte Akkumulator 6 besitzt nach einem Überlauf einen Restwert, welcher jedoch bei der vorliegenden Funktion der in Fig. 4 gezeigten Schaltung nicht berücksichtigt werden muß. Soll auch dieser Restwert nicht verworfen werden, kann ein weiterer Akkumulator mit nochmals schnellerer Zeitbasis verwendet werden, der analog zu der zuvor beschriebenen Vorgehensweise den Restwert des Akkumulators 6 auswertet und zu einer nochmals genaueren Taktflanke des MSB-Ausgangspulses führt.

Gemäß Fig. 4 ist zusätzlich ein Differenzierer 10 vorgesehen, welcher das von dem Komparator 7 gelieferte Signal MSB_fine differenziert und somit lediglich den Taktflanken entsprechende Pulse erzeugt. Mit einem nachgeschalteten Pulsbegrenzer 11 kann einerseits die Amplitude dieser Dirac-Pülse begrenzt und andererseits beispielsweise lediglich die einer ansteigenden Taktflanke entsprechenden Pulse, welche ein positives Vorzeichen besitzen, ausgegeben werden. Das von dem Pulsbegrenzer 11 ausgegebene Signal MSB_fine_puls entspricht somit einer Folge von zeitlich exakt erzeugten MSB-Taktflankenpulsen.

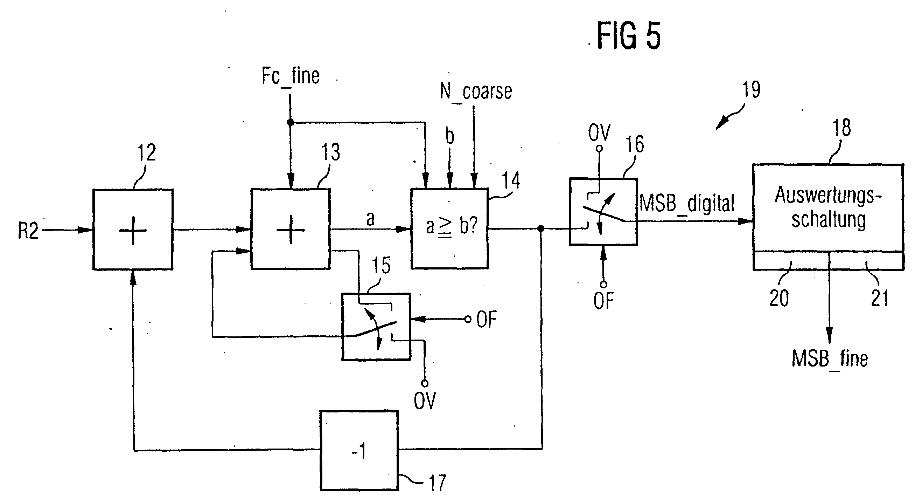

In Fig. 5 ist ein weiteres Ausführungsbeispiel für den 'schnellen' DDS-Schaltungsteil 19, welcher mit der hohen Taktfrequenz Fc_fine betrieben wird, dargestellt. Im vorliegenden Beispiel ist der 'schnelle' DDS-Schaltungsteil 19 durch einen Sigma-Delta-Modulator gebildet, dem das pulsförmige R2-Signal zugeführt ist. Die hohe Taktfrequenz Fc_fine kann dabei wiederum beispielsweise dem zehnfachen Wert der Taktfrequenz Fc_coarse entsprechen.

Das R2-Signal wird einem Addierer 12 zugeführt, dessen Ausgang mit einem weiteren Addierer 13 verbunden ist. Der Ausgang des Addierers 13 ist an seinen Eingang rückgekoppelt und zudem mit einem Komparator 14 verbunden. Dem Komparator ist ein Vergleichswert b zugeführt, der in der Regel den Wert Null besitzt, so daß der Komparator 14 den aus dem Wert R2 resultierenden Zwischenwert a des Addierers 13 mit dem Wert Null vergleicht. Ist a ≥ b, wird von dem Komparator 14 das grobe Frequenzwort N_coarse ausgegeben. Im anderen Fall gibt der Komparator 14 den Wert 0 aus. Der Komparator 14 kann auch bei a ≥ b den Wert 1 ausgeben, falls im Rückkopplungspfad ein Verstärker angeordnet ist, dessen Verstärkungsfaktor dem Frequenzwort N_coarse entspricht. Der Ausgang des Komparators 14 ist über einen Negierer 17 mit integriertem Digital/Analog-Wandler zu dem Addierer 12 rückgekoppelt.

Der von dem Komparator 14 gelieferte binäre Bitstrom repräsentiert in digitaler Form den am Eingang des Sigma-Delta-Modulators anliegenden Signalwert R2 in Bezug auf das Frequenzwort N_coarse und kann anschließend einfach zur Erzeugung der MSB-Taktflanke zum angestrebten Zeitpunkt t_i verwendet werden. Liegt am Eingang bei N_coarse = 10V beispielsweise ein Puls R2 mit einer Amplitude von 6V an, wird vom Komparator 14 sechsmal eine binäre "1" und viermal eine binäre "0" ausgegeben. Liegt hingegen eine Amplitude von 6,5V an, wird von dem Komparator zunächst erneut sechsmal eine binäre "1" und viermal eine binäre "0" ausgegeben, während im nächsten Zyklus siebenmal eine "1" und dreimal eine "0" ausgegeben wird. Der Sigma-Delta-Modulator berücksichtigt somit Restwerte des vorhergehenden Zyklusses im nachfolgenden Zyklus. Gemäß Fig. 5 sind zudem steuerbare Schalter 15 und 16 vorgesehen, welche in Abhängigkeit von dem Überlaufsignal bei OF = "0" auf 0V gelegt werden und den Sigma-Delta-Modulator in diesem Fall zurücksetzen, so daß z.B. der Addierer 13 bei OF = "0" unterbrochen wird und bei OF = "1" wieder startet und weiterzählt.

Der Sigma-Delta-Modulator liefert somit eine digitale Zahlenfolge MSB_digital, deren durch die darin enthaltene Anzahl von binären "1" bestimmter Zahlenwert die genaue Position der MSB-Flanke, d.h. den tatsächlichen Überlauf-Zeitpunkt der DDS-Schaltung 1, angibt. Mit Hilfe einer einfachen Auswertungsschaltung 18 kann diese digitale Zahlenfolge ausgewertet, die genaue Flankenposition bestimmt und die exakte MSB-Flanke gesetzt werden. Zu diesem Zweck ist beispielsweise ein Pulszähler 20 vorgesehen, welcher den digitalen Ausgangsbitstrom MSB_digital des Komparators 14 zählt und diesen Wert für die Dauer einer Grobtaktperiode T_coarse festhält. Des weiteren kann ein Pulsformer 21 vorgesehen sein, der schließlich mit hoher zeitlicher Auflösung die exakte MSB-Flanke MSB_fine in Form eines Nadelpulses an dem durch den Pulszähler 20 bestimmten Ort erzeugt. Mit zunehmender Ordnung des Sigma-Delta-Modulators können die Rauscheigenschaften der Schaltung und die spektrale Reinheit des Ausgangspulses MSB_fine verbessert werden.

## Patentansprüche

1. Taktsignalgenerator,
mit einer DDS-Schaltung (1) zum Aufaddieren eines Frequenzworts (N_coarse) gemäß einer bestimmten ersten Frequenz (Fc_coarse) und zum Erzeugen eines das Taktsignal bestimmenden Ausgangspulses (MSB_coarse), falls ein Überlauf der DDS-Schaltung (1) auftritt,
**dadurch gekennzeichnet,**
**daß** eine Schaltungsanordnung (2,3) vorgesehen ist, um einen Parameterwert (R2) zu ermitteln, der einem idealen Überlaufzeitpunkt (t_i) der DDS-Schaltung (1) entspricht, und
**daß** eine Ausgangspuls-Erzeugungsschaltung (19) vorgesehen ist, um in Abhängigkeit von dem von der Schaltungsanordnung (2,3) ermittelten Parameterwert (R2) unter Verwendung einer zweiten Frequenz (Fc_fine), welche höher als die erste Frequenz (Fc_coarse) ist, einen korrigierten Zeitpunkt für den Ausgangspuls (MSB_fine) zu bestimmen und den Ausgangspuls zu diesem korrigierten Zeitpunkt zur Generierung des Taktsignals auszugeben.

2. Taktsignalgenerator nach Anspruch 1,
**dadurch gekennzeichnet,**
**daß** die erste Frequenz (Fc_coarse) und die zweite Frequenz (Fc_fine) zueinander phasenstarr synchronisiert sind.

3. Taktsignalgenerator nach Anspruch 1 oder 2,
**dadurch gekennzeichnet,**
**daß** die DDS-Schaltung (1) nach dem Auftreten des Überlaufs mit dem Aufaddieren des Frequenzworts (N_coarse) beginnend mit einem entsprechenden Restwert (R1) fortfährt, und
**daß** die Schaltungsanordnung (2,3) derart ausgestaltet ist, daß sie anhand dieses Restwerts (R1) den dem idealen Überlaufzeitpunkt der DDS-Schaltung (1) entsprechenden Parameterwert (R2) bestimmt und der Ausgangspuls-Erzeugungsschaltung (19) zuführt.

4. Taktsignalgenerator nach Anspruch 3,
**dadurch gekennzeichnet,**
**daß** die DDS-Schaltung (1) als Restwert (R1) nach dem Überlauf den sich aus der Berechnung k * N_coarse mod 2^{m} ergebenden Wert verwendet,
wobei k die Anzahl der zum Feststellen des Überlaufs erforderlichen und der ersten Frequenz (Fc_coarse) entsprechenden Taktperioden (T_coarse), N_coarse den Wert des Frequenzworts und m die Bitbreite der DDS-Schaltung (1) bezeichnet.

5. Taktsignalgenerator nach Anspruch 3 oder 4,
**dadurch gekennzeichnet,**
**daß** die Schaltungsanordnung (2,3) derart ausgestaltet ist, daß sie die Differenz zwischen dem Frequenzwert (N_coarse) und dem nach dem Überlauf der DDS-Schaltung (1) vorhandenen Restwert (R1) bildet und diesen Differenzwert (R2) als Parameterwert der Ausgangspuls-Erzeugungsschaltung (19) zuführt.

6. Taktsignalgenerator nach einem der Ansprüche 3-5,
**dadurch gekennzeichnet,**
**daß** die Ausgangspuls-Erzeugungsschaltung (19) derart ausgestaltet ist, daß sie ein weiteres Frequenzwort (N_fine) mit der zweiten Frequenz (Fc_fine) aufaddiert und bei Erreichen eines dem von der Schaltungsanordnung (2,3) zugeführten Parameterwerts (R2) entsprechenden Zählerstands den korrigierten Ausgangspuls (MSB_fine) ausgibt,
wobei das zweite Frequenzwort (N_fine) kleiner als das erste Frequenzwort (N_coarse) ist und das ganzzahlige Verhältnis zwischen der zweiten Frequenz (Fc_fine) und der ersten Frequenz (Fc_coarse) dem ganzzahligen Verhältnis zwischen dem Frequenzwort (N_coarse) und dem weiteren Frequenzwort (N_fine) entspricht.

7. Taktsignalgeneratorschaltung nach Anspruch 6,
**dadurch gekennzeichnet,**
**daß** die Ausgangspuls-Erzeugungsschaltung (19) einen Akkumulator (6) und einen mit dem Akkumulator (6) verbundenen Komparator (7) umfaßt,
wobei an den Akkumulator (6) das weitere Frequenzwort (N_fine) angelegt ist und der Akkumulator (6) das weitere Frequenzwort (N_fine) aufaddiert, und
wobei der Komparator (7) den augenblicklichen Zählerstand des Akkumulators (6) mit dem von der Schaltungsanordnung (2,3) angelegten Parameterwert (R2) vergleicht und den korrigierten Ausgangspuls (MSB_fine) erzeugt, falls der augenblickliche Zählerstand des Akkumulators (6) den Parameterwert (R2) erreicht hat.

8. Taktsignalgenerator nach einem der Ansprüche 3-5,
**dadurch gekennzeichnet,**
**daß** die Ausgangspuls-Erzeugungsschaltung (19) in Form einer Sigma-Delta-Modulatorschaltung (12-17) ausgestaltet ist.

9. Taktsignalgenerator nach Anspruch 8,
**dadurch gekennzeichnet,**
**daß** die Ausgangspuls-Erzeugungsschaltung (19) eine Auswertungsschaltung (18) umfaßt, welche einen von der Sigma-Delta-Modulatorschaltung (12-17) ausgegebenen Bitstrom auswertet, davon abhängig den korrigierten Zeitpunkt für den Ausgangspuls (MSB_fine) bestimmt und den korrigierten Ausgangspuls (MSB_fine) zu diesem Zeitpunkt erzeugt.

10. Taktsignalgenerator nach Anspruch 9,
**dadurch gekennzeichnet,**
**daß** die Auswertungsschaltung (18) einen Pulszähler (20) zum Zählen des von der Sigma-Delta-Modulatorschaltung (12-17) ausgegebenen Bitstroms und einen Pulsformer (21) zum Erzeugen des korrigierten Ausgangspulses (MSB_fine) zu einem von dem Pulszähler (20) bestimmten korrigierten Zeitpunkt umfaßt.

11. Taktsignalgenerator nach einem der Ansprüche 8-10,
**dadurch gekennzeichnet,**
**daß** der Sigma-Delta-Modulatorschaltung (12-17) als Eingangssignale der von der Schaltungsanordnung (2,3) angelegte Parameterwert (R2) und das an die DDS-Schaltung (1) angelegte Frequenzwort (N_coarse) zugeführt sind.

12. Taktsignalgenerator nach Anspruch 11 und Anspruch 9 oder 10,
**dadurch gekennzeichnet,**
**daß** die Sigma-Delta-Modulatorschaltung (12-17) mindestens einen rückgekoppelten Addierer (12, 13) umfaßt, dem als Eingangssignal der von der Schaltungsanordnung (2,3) gelieferte Parameterwert (R2) zugeführt ist, und
**daß** die Sigma-Delta-Modulatorschaltung (12-17) einen mit dem Ausgang des Addierers (12,13) verbundenen Komparator (14) umfaßt, dem als Referenzwert das an die DDS-Schaltung (1) angelegte Frequenzwort (N_fine) zugeführt ist, wobei der Komparator (14) den Bitstrom an die Auswertungsschaltung (18) ausgibt.

13. Verwendung eines Taktsignalgenerators nach einem der vorhergehenden Ansprüche zur Signalsynthese in einem Mobiltelefon.

## Claims

1. Clock signal generator comprising a DDS circuit (1) for adding up a frequency word (N coarse) according to a particular first frequency (Fc_coarse) and for generating an output pulse (MSB_coarse) determining the clock signal if an overflow of the DDS circuit (1) occurs,
**characterized in that**
a circuit arrangement (2, 3) is provided for determining a parameter value (R2) which corresponds to an ideal overflow time (t_i) of the DDS circuit (1) and that an output pulse generating circuit (19) is provided for determining a corrected time for the output pulse (MSB_fine) in dependence on the parameter value (R2), determined by the circuit arrangement (2, 3), using a second frequency (Fc_fine) which is higher than the first frequency (Fc_coarse), and to output the output pulse at this corrected time for generating the clock signal.

2. Clock signal generator according to Claim 1,
**characterized in that**
the first frequency (Fc_coarse) and the second frequency (Fc_fine) are phase locked to one another.

3. Clock signal generator according to Claim 1 or 2,
**characterized in that**
the DDS circuit (1), after the occurrence of the overflow, continues to add up the frequency word (N_coarse) beginning at a corresponding residual value (R1), and that the circuit arrangement (2, 3) is designed in such a manner that it determines the parameter value (R2) corresponding to the ideal overflow time of the DDS circuit (1) by means of this residual value (R1) and supplies it to the output pulse generating circuit (19).

4. Clock signal generator according to Claim 3,
**characterized in that**
the DDS circuit (1) uses the value resulting from the calculation k * N_coarse mod 2^{m} as residual value (R1) after the overflow,
where k is the number of clock periods (T_coarse) required for determining the overflow and corresponding to the first frequency (Fc_coarse), N_coarse is the value of the frequency word and m is the bit width of the DDS circuit (1).

5. Clock signal generator according to Claim 3 or 4,
**characterized in that**
the circuit arrangement (2, 3) is designed in such a manner that it forms the difference between the frequency value (N_coarse) and the residual value (R1) present after the overflow of the DDS circuit (1) and supplies this difference value (R2) as parameter value to the output pulse generating circuit (19).

6. Clock signal generator according to one of Claims 3-5,
**characterized in that**
the output pulse generating circuit (19) is designed in such a manner that it adds up a further frequency word (N_fine) with the second frequency (Fc_fine) and, when a count corresponding to the parameter value (R2) supplied by the circuit arrangement (2, 3) is reached, outputs the corrected output pulse (MSB_fine), where the second frequency word (N_fine) is smaller than the first frequency word (N_coarse) and the integral ratio between the second frequency (Fc_fine) and the first frequency (Fc_coarse) corresponds to the integral ratio between the frequency word (N_coarse) and the further frequency word (N_fine).

7. Clock signal generator circuit according to Claim 6,
**characterized in that**
the output pulse generating circuit (19) comprises an accumulator (6) and a comparator (7) connected to the accumulator (6),
where the further frequency word (N_fine) is applied to the accumulator (6) and the accumulator (6) adds up the further frequency word (N_fine) and
where the comparator (7) compares the instantaneous count of the accumulator (6) with the parameter value (R2) applied by the circuit arrangement (2, 3) and generates the corrected output pulse (MSB_fine) if the instantaneous count of the accumulator (6) has reached the parameter value (R2).

8. Clock signal generator according to one of Claims 3-5,
**characterized in that**
the output pulse generating circuit (19) is designed in the form of a sigma-delta modulator circuit (12-17).

9. Clock signal generator according to Claim 8,
**characterized in that**
the output pulse generating circuit (19) comprises an evaluating circuit (18) which evaluates a bit stream output by the sigma-delta modulator circuit (12-17), determines in dependence thereon the corrected time for the output pulse (MSB_fine) and generates the corrected output pulse (MSB_fine) at this time.

10. Clock signal generator according to Claim 9,
**characterized in that**
the evaluating circuit (18) comprises a pulse counter (20) for counting the bit stream output by the sigma-delta modulator circuit (12-17) and a pulse shaper (21) for generating the corrected output pulse (MSB_fine) at a corrected time determined by the pulse counter (20).

11. Clock signal generator according to one of Claims 8-10,
**characterized in that**
the sigma-delta modulator circuit (12-17) is supplied with the parameter value (R2) applied by the circuit arrangement (2, 3) and with the frequency word (N_coarse) applied to the DDS circuit (1) as input signals.

12. Clock signal generator according to Claim 11 and Claim 9 or 10,
**characterized in that**
the sigma-delta modulator circuit (12-17) comprises at least one adder (12, 13) with feedback, which is supplied with the parameter value (R2) supplied by the circuit arrangement (2, 3) as input signal and that the sigma-delta modulator circuit (12-17) comprises a comparator (14) connected to the output of the adder (12, 13), which is supplied with the frequency word (N_fine) applied to the DDS circuit (1) as reference value, where the comparator (14) outputs the bit stream to the evaluating circuit (18).

13. Use of a clock signal generator according to one of the preceding claims for the purpose of signal synthesis in a mobile telephone.

## Revendications

1. Générateur de signal d'horloge
comportant un circuit DDS (1) destiné à additionner à lui-même un mot de fréquence (N_coarse) en suivant une première fréquence définie (Fc_coarse) et à générer une impulsion de sortie (MSB_coarse), qui définit le signal d'horloge, dans le cas où se produit un débordement du circuit DDS (1),
**caractérisé par le fait**
**qu'**il est prévu un montage de circuits (2, 3) pour déterminer une valeur de paramètre (R2), qui correspond à un instant idéal de débordement (t_i) du circuit DDS (1) et
**qu'**il est prévu un circuit (19) générateur d'impulsions de sortie destiné à déterminer, en fonction de la valeur de paramètre (R2) déterminée par le montage de circuits (2, 3) et en utilisant une deuxième fréquence (Fc_fine), qui est plus élevée que la première fréquence (Fc_coarse), un instant corrigé pour l'impulsion de sortie (MSB_fine) et à émettre l'impulsion de sortie à cet instant corrigé en vue de générer le signal d'horloge.

2. Générateur de signal d'horloge selon la revendication 1
**caractérisé par le fait**
**que** la première fréquence (Fc_coarse) et la deuxième fréquence (Fc_fine) sont en accord fixe de phase l'une sur l'autre.

3. Générateur de signal d'horloge selon la revendication 1 ou 2
**caractérisé par le fait**
**que** le circuit DDS (1) continue, après l'apparition du débordement, à additionner le mot de fréquence (N_coarse) en commençant avec une valeur résiduelle correspondante (R1) et
**que** le montage de circuits (2, 3) est conçu de telle sorte qu'il détermine, à l'aide de cette valeur résiduelle (R1), la valeur de paramètre (R2) correspondant à l'instant idéal de débordement du circuit DDS (1) et qu'il l'applique au circuit générateur (19) de l'impulsion de sortie.

4. Générateur de signal d'horloge selon la revendication 3
**caractérisé par le fait**
**que** le circuit DDS (1) utilise, en tant que valeur résiduelle (R1) après le débordement, la valeur qui découle du calcul k * N_coarse mod 2^{m},
k désignant le nombre de périodes d'horloge (T_coarse) nécessaires pour constater le débordement et correspondant à la première fréquence (Fc_coarse), N_coarse désignant la valeur du mot de fréquence et m désignant la largeur de bit du circuit DDS (1).

5. Générateur de signal d'horloge selon la revendication 3 ou 4
**caractérisé par le fait**
**que** le montage de circuits (2, 3) est conçu de telle sorte qu'il forme la différence entre la valeur de fréquence (N_coarse) et la valeur résiduelle (R1) existant après le débordement du circuit DDS (1) et qu'il applique cette différence (R2), en tant que valeur de paramètre, au circuit générateur (19) de l'impulsion de sortie.

6. Générateur de signal d'horloge selon l'une des revendications 3 à 5
**caractérisé par le fait**
**que** le circuit générateur (19) de l'impulsion de sortie est conçu de telle sorte qu'il additionne un autre mot de fréquence (N_fine) avec la deuxième fréquence (Fc_fine) et qu'il émet l'impulsion de sortie corrigée (MSB_fine) lorsque le compteur atteint une position correspondant à la valeur de paramètre (R2) appliquée par le montage de circuits (2, 3), le deuxième mot de fréquence (N_fine) étant plus court que le premier mot de fréquence (N_coarse) et le rapport entier entre la deuxième fréquence (Fc_fine) et la première fréquence (Fc_coarse) correspondant au rapport entier entre le mot de fréquence (N_coarse) et l'autre mot de fréquence (N_fine).

7. Générateur de signal d'horloge selon la revendication 6
**caractérisé par le fait**
**que** le circuit générateur (19) de l'impulsion de sortie comporte un accumulateur (6) et un comparateur (7) relié à l'accumulateur (6),
l'autre mot de fréquence (N_fine) étant appliqué à l'accumulateur (6) et l'accumulateur (6) additionnant l'autre mot de fréquence (N_fine) et
le comparateur (7) comparant la position actuelle du compteur de l'accumulateur (6) à la valeur du paramètre (R2), appliquée par le montage de circuits (2, 3), et générant l'impulsion de sortie corrigée (MSB_fine), dans le cas où la position actuelle du compteur de l'accumulateur (6) atteint la valeur du paramètre (R2).

8. Générateur de signal d'horloge selon l'une des revendications 3 à 5
**caractérisé par le fait**
**que** le circuit générateur (19) de l'impulsion de sortie est conçu sous la forme d'un circuit modulateur sigma-delta (12- 17).

9. Générateur de signal d'horloge selon la revendication 8
**caractérisé par le fait**
**que** le circuit générateur (19) de l'impulsion de sortie comporte un circuit d'évaluation (18), qui évalue le flux binaire émit par le circuit modulateur sigma-delta (12 - 17), qui détermine, en fonction de cette évaluation, l'instant corrigé pour l'impulsion de sortie (MSB_fine) et qui génère à cet instant l'impulsion de sortie (MSB_fine) corrigée.

10. Générateur de signal d'horloge selon la revendication 9
**caractérisé par le fait**
**que** le circuit d'évaluation (18) comporte un compteur d'impulsions (20) destiné à compter le flux binaire émis par le circuit modulateur sigma-delta (12 - 17) et un circuit de mise en forme des impulsions (21) destiné à générer l'impulsion de sortie corrigée (MSB_fine) à un instant corrigé défini par le compteur d'impulsions (20).

11. Générateur de signal d'horloge selon l'une des revendications 8 à 10
**caractérisé par le fait**
**que** le circuit modulateur sigma-delta (12 - 17) reçoit comme signaux d'entrée la valeur du paramètre (R2) appliquée par le montage de circuits (2, 3) et le mot de fréquence (N_coarse) appliqué au circuit DDS (1).

12. Générateur de signal d'horloge selon la revendication 11 et la revendication 9 ou 10
**caractérisé par le fait**
**que** le circuit modulateur sigma-delta (12 - 17) comprend au moins un additionneur à réinjection (12, 13), auquel est appliqué, en tant que signal d'entrée, la valeur du paramètre (R2) appliquée par le montage de circuits (2, 3) et
**que** le circuit modulateur sigma-delta (12 - 17) comprend un comparateur (14), relié à la sortie de l'additionneur à réinjection (12, 13) et auquel est appliqué, en tant que valeur de référence, le mot de fréquence (N_fine) appliqué au circuit DDS (1), le comparateur (14) envoyant le flux binaire au circuit d'évaluation (18).

13. Utilisation d'un générateur de signal d'horloge selon l'une des revendications précédentes pour la synthèse de signaux dans un téléphone portable.
